# EUROPEAN PATENT SPECIFICATION

(11) **EP 3 937 828 B1**
(45) Date of publication and mention of the grant of the patent: **13.08.2025**
(21) Application number: 20769875.4
(22) Date of filing: 11.03.2020
(51) Int. Cl.: A61C 7/00, A61C 9/00, A61C 7/08

(54) **DETERMINATION OF AT LEAST ONE SUITABLE REMOVABLE ORTHODONTIC APPLIANCE**
BESTIMMUNG MINDESTENS EINES GEEIGNETEN HERAUSNEHMBAREN ORTHODONTISCHEN GERÄTES
DÉTERMINATION D'AU MOINS UN APPAREIL ORTHODONTIQUE AMOVIBLE APPROPRIÉ

(30) Priority: 11.03.2019 FI 20195178
(43) Date of publication of application: 19.01.2022
(73) Proprietor: Planmeca OY, 00880 Helsinki (FI); LM-Instruments OY, 21601 Parainen (FI)
(72) Inventor: RÖNNHOLM, Valter, 20601 Parainen (FI); SALONEN, Ville, 00880 Helsinki (FI); TOIMELA, Lasse, 00880 Helsinki (FI)
(86) International application number: PCT/FI2020/050154
(87) International publication number: WO 2020/183064

(56) References cited:
- EP-A1- 2 952 152
- EP-B1- 1 076 529
- WO-A1-2018/170030
- WO-A1-2019/009992
- WO-A1-2019/040927
- WO-A2-2016/075527
- US-A- 5 882 192
- US-A1- 2002 010 568
- US-A1- 2002 156 652
- US-A1- 2002 180 760
- US-A1- 2003 003 416
- US-A1- 2003 163 291
- US-A1- 2011 191 075
- US-A1- 2017 007 366
- US-A1- 2017 367 792
- US-A1- 2018 235 730
- US-A1- 2018 360 567

## Description

### FIELD OF THE INVENTION:

The invention relates to the field of removable orthodontic appliances. In particular, the invention relates to a solution for determining a suitable removable orthodontic appliance for a patient.

### BACKGROUND

In the existing clinical practice, the selection of the characteristics and shapes of an orthodontic removable appliance is usually the responsibility of a clinician based on non-quantifiable assessment of a patient and manual fitting and modification of the appliance. This often leads to uncertainties, potential treatment errors and difficulties in creating statistical information that could improve the selection process in the future. Therefore, there is a need for a solution that would enable a more efficient and accurate process for determining a suitable removable orthodontic appliance for a patient. An example of a solution aiming for that is presented in EP 2952152 patent application publication.

### SUMMARY

The present invention is defined in claims 1, 11, 21, or 22. Further embodiments are set out in the appended dependent claims.

According to a first aspect, there is provided a computer-implemented method for determining at least one removable orthodontic appliance. The method comprises obtaining a digital impression of at least part of a dentition of a patient; obtaining, based on the digital impression, at least one characteristic relating to at least one tooth; comparing the at least one characteristic with corresponding characteristics associated with a set of predefined removable orthodontic appliances; and determining at least one suitable removable orthodontic appliance among the set of predefined removable orthodontic appliances based on the comparison.

In an embodiment, the at least one characteristic comprises a dental arc perimeter from a mesial surface of the left canine to a mesial surface of the right canine.

In an embodiment, the at least one characteristic comprises a width measurement of at least one individual tooth.

In an embodiment, the at least one characteristic comprises mesiodistal widths of an erupted left lateral incisor, erupted left central incisor, erupted right central incisor and erupted right lateral incisor of the same jaw of the digital impression.

In an embodiment, the at least one characteristic comprises a measurement of a dental arch depth of the digital impression.

In an embodiment, the at least one characteristic comprises a descriptor of a dental arch width of the digital impression.

In an embodiment, the method further comprises obtaining a cephalometric analysis of the patient comprising a vertical growth pattern descriptor of the patient; comparing the vertical growth pattern descriptor with corresponding characteristics associated with the set of predefined removable orthodontic appliances; and determining the at least one suitable removable orthodontic appliance among the set of predefined removable orthodontic appliances based on the comparison.

In an embodiment, the cephalometric analysis is based on a cone beam computed tomography image.

In an embodiment, the at least one characteristic comprises mesiodistal widths of any unerupted permanent lateral incisor, unerupted permanent left central incisor, unerupted permanent right central incisor and unerupted permanent right lateral incisor of the same jaw of the digital impression, and wherein the method further comprises obtaining a magnetic resonance imaging or a radiographic image of unerupted teeth of the dentition; obtaining data regarding the eruption status of the patient; and wherein the comparing comprises comparing the measurements of the erupted incisors and the unerupted incisors with corresponding characteristics associated with the set of predefined removable orthodontic appliances.

In an embodiment, the method further comprises outputting a digital three-dimensional model of the at least one suitable removable orthodontic appliance to produce a physical three-dimensional model of the at least one suitable removable orthodontic.

According to the present invention, the method further comprises comparing the digital impression of the patient and information associated with the patient to digital impressions, removable orthodontic appliances and information associated with a plurality of already treated patients stored in a database; determining, based on the comparison, at least one previously treated patient that correlates with or resembles the patient case; and using information of the at least one previously treated case in determining the at least one suitable removable orthodontic appliance among the set of predefined removable orthodontic appliances.

According to a second aspect, there is provided a system for determining at least one removable orthodontic appliance. The system comprises at least one processing unit and at least one memory connected to the at least one processing unit. The at least one memory stores program instructions that, when executed by the at least one processing unit, cause the system to obtain a digital impression of at least part of a dentition of a patient; obtain, based on the digital impression, at least one characteristic relating to at least one tooth; compare the at least one characteristic with corresponding characteristics associated with a set of predefined removable orthodontic appliances; and determine at least one suitable removable orthodontic appliance among the set of predefined removable orthodontic appliances based on the comparison.

In an embodiment, the at least one characteristic comprises a dental arc perimeter from a mesial surface of the left canine to a mesial surface of the right canine.

In an embodiment, the at least one characteristic comprises a width measurement of at least one individual tooth.

In an embodiment, the at least one characteristic comprises mesiodistal widths of an erupted left lateral incisor, erupted left central incisor, erupted right central incisor and erupted right lateral incisor of the same jaw of the digital impression.

In an embodiment, the at least one characteristic comprises a measurement of a dental arch depth of the digital impression.

In an embodiment, the at least one characteristic comprises a descriptor of a dental arch width of the digital impression.

In an embodiment, the at least one memory stores program instructions that, when executed by the at least one processing unit, cause the system to obtain a cephalometric analysis of the patient comprising a vertical growth pattern descriptor of the patient; compare the vertical growth pattern descriptor with corresponding characteristics associated with the set of predefined removable orthodontic appliances; and determine the at least one suitable removable orthodontic appliance among the set of predefined removable orthodontic appliances based on the comparison.

In an embodiment, the cephalometric analysis is based on a cone beam computed tomography image.

In an embodiment, the at least one characteristic comprises mesiodistal widths of any unerupted permanent lateral incisor, unerupted permanent left central incisor, unerupted permanent right central incisor and unerupted permanent right lateral incisor of the same jaw of the digital impression, and wherein the at least one memory stores program instructions that, when executed by the at least one processing unit, cause the system to obtaining a magnetic resonance imaging or a radiographic image of unerupted teeth of the dentition; obtaining data regarding the eruption status of the patient; and wherein the comparing comprises comparing the measurements of the erupted incisors and the unerupted incisors with corresponding characteristics associated with the set of predefined removable orthodontic appliances.

In an embodiment, the at least one memory stores program instructions that, when executed by the at least one processing unit, cause the system to output a digital three-dimensional model of the at least one suitable removable orthodontic appliance to produce a physical three-dimensional model of the at least one suitable removable orthodontic.

According to the second aspect the at least one memory stores program instructions that, when executed by the at least one processing unit, cause the system to compare the digital impression of the patient and information associated with the patient to digital impressions, removable orthodontic appliances and information associated with a plurality of already treated patients stored in a database; determine, based on the comparison, at least one previously treated patient that correlates with or resembles the patient case; and use information of the at least one previously treated case and/or the corresponding orthodontic appliance in determining the at least one suitable removable orthodontic appliance among the set of predefined removable orthodontic appliances.

According to a third aspect, there is provided a system for determining at least one removable orthodontic appliance. The system comprises at least one processor configured to obtain a digital impression of at least part of a dentition of a patient; obtain, based on the digital impression, at least one characteristic relating to at least one tooth; compare the at least one characteristic with corresponding characteristics associated with a set of predefined removable orthodontic appliances; and determine at least one suitable removable orthodontic appliance among the set of predefined removable orthodontic appliances based on the comparison.

According to a fourth aspect, there is provided a system for determining at least one removable orthodontic appliance. The system comprises means for obtaining a digital impression of at least part of a dentition of a patient; means for obtaining, based on the digital impression, at least one characteristic relating to at least one tooth; means for comparing the at least one characteristic with corresponding characteristics associated with a set of predefined removable orthodontic appliances; and means for determining at least one suitable removable orthodontic appliance among the set of predefined removable orthodontic appliances based on the comparison.

According to a fifth aspect, there is provided a computer program comprising program code, which when executed by at least one processor, causes the at least one processor to perform the method of the first aspect.

According to a sixth aspect, there is provided a computer readable medium comprising program code, which when executed by at least one processor, causes the at least one processor to perform the method of any the first aspect.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**FIG. 1** illustrates a flow diagram of a computer-implemented method for determining at least one removable orthodontic appliance according to an embodiment.
**FIG. 2A** illustrates exemplary digital impressions of upper and lower dental arches.
**FIG. 2B** illustrates simplifier view provided by a computer program executed by a computer.
**FIG. 2C** illustrates another simplified view provided by the computer program executed by the computer.
**FIG. 2D** illustrates another simplified view provided by the computer program executed by the computer.
**FIG. 3** illustrates a system diagram depicting an exemplary system including a variety of optional hardware and software components.

### DETAILED DESCRIPTION

Reference will now be made in detail to the embodiments of the present invention, examples of which are illustrated in the accompanying drawings.

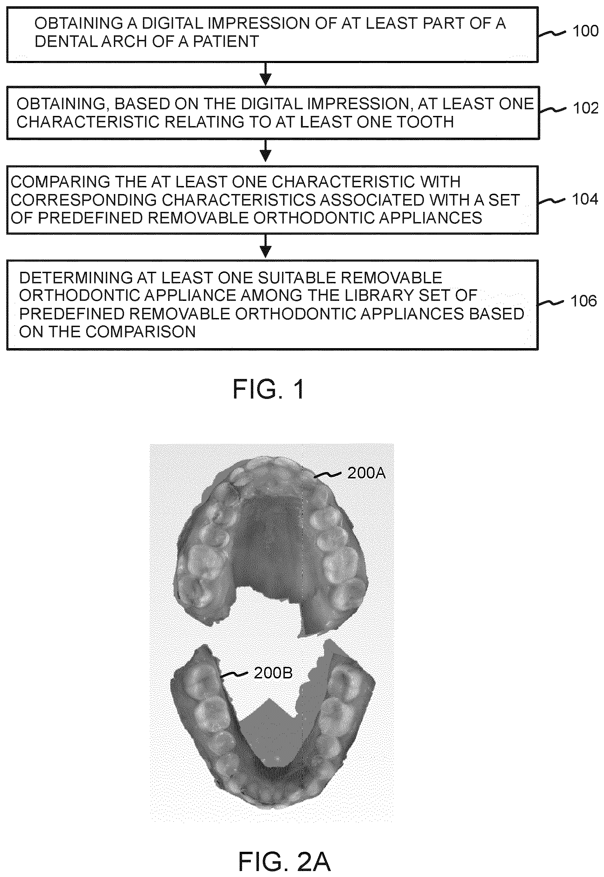

FIG. 1 illustrates a flow diagram of a computer-implemented method for determining at least one removable orthodontic appliance according to an embodiment. Steps 100-106 discussed below may be implemented as a computer-implemented method by using one or more software programs executable in a data processing device, for example, a computer.

At 100, a digital impression of at least part of a dentition of a patient is obtained. The digital impression may comprise, for example, a digital impression obtained based on a scan of an upper and/or a lower dental arch of a patient's mouth. The digital impression may be provided, for example, by an intra-oral scanner connected to a computer or a cone beam computer tomograph. Alternatively, the digital impression may be obtained from a file comprising the digital impression in an electronic form.

At 102, at least one characteristic relating to at least one tooth is obtained based on the digital impression. In an embodiment, the at least one characteristic may be determined automatically from the digital impression. Various image recognition solutions and/or artificial intelligence may be used in determining the at least one characteristic. In another embodiment, the at least one characteristic may be received from one or more user selections received from a user via a graphical user interface displaying the digital impression.

At 104, the at least one characteristic is compared with corresponding characteristics associated with a set of predefined removable orthodontic appliances. Various data about the set of predefined removable orthodontic appliances may be stored in a memory.

At 106, at least one suitable removable orthodontic appliance among the set of predefined removable orthodontic appliances is determined based on the comparison. In an embodiment, the at least one suitable removable orthodontic appliance may be indicated to a user via the graphical user interface.

In one embodiment, the at least one characteristic comprises a dental arc perimeter from a mesial surface of the left canine to a mesial surface of the right canine. Various image recognition solutions and/or artificial intelligence may be used in determining the dental arc perimeter. In another embodiment, the dental arc perimeter may be received from one or more user selections received from a user via a graphical user interface displaying the digital impression.

In one embodiment, the at least one characteristic comprises a width measurement of at least one individual tooth. Various image recognition solutions and/or artificial intelligence may be used in determining the width measurement of at least one individual tooth. In another embodiment, the width measurement of at least one individual tooth may be received from one or more user selections received from a user via a graphical user interface displaying the digital impression.

In one embodiment, the at least one characteristic comprises mesiodistal widths of an erupted left lateral incisor, erupted left central incisor, erupted right central incisor and erupted right lateral incisor of the same jaw of the digital impression. Various image recognition solutions and/or artificial intelligence may be used in determining the mesiodistal widths. In another embodiment, the mesiodistal widths measurements may be received from one or more user selections received from a user via a graphical user interface displaying the digital impression.

In one embodiment, the at least one characteristic comprises a measurement of a dental arch depth of the digital impression. Various image recognition solutions and/or artificial intelligence may be used in determining the measurement of the dental arch depth of the digital impression. In another embodiment, the measurement of the dental arch depth of the digital impression may be received from one or more user selections received from a user via a graphical user interface displaying the digital impression.

In one embodiment, the at least one characteristic comprises a descriptor of a dental arch width of the digital impression. Various image recognition solutions and/or artificial intelligence may be used in determining the descriptor of the dental arch width of the digital impression. In another embodiment, the descriptor of a dental arch width of the digital impression may be received from one or more user selections received from a user via a graphical user interface displaying the digital impression.

In one embodiment, a cephalometric analysis of the patient comprising a vertical growth pattern descriptor of the patient. The cephalometric analysis may be based, for example, on a cone beam computed tomography image. The vertical growth pattern descriptor may then be compared with corresponding characteristics associated with the set of predefined removable orthodontic appliances. The at least one suitable removable orthodontic appliance among the set of predefined removable orthodontic appliances may then be determined based on the comparison.

In one embodiment, the at least one characteristic comprises mesiodistal widths of any unerupted permanent lateral incisor, unerupted permanent left central incisor, unerupted permanent right central incisor and unerupted permanent right lateral incisor of the same jaw of the digital impression. In addition to this, a magnetic resonance imaging or a radiographic image of unerupted teeth of the dentition may be obtained and also data regarding the eruption status of the patient may be obtained. The comparing may then comprise comparing the measurements of the erupted incisors and the unerupted incisors with corresponding characteristics associated with the set of predefined removable orthodontic appliances.

In one embodiment, a digital three-dimensional model of the at least one suitable removable orthodontic appliance may be output to produce a physical three-dimensional model of the at least one suitable removable orthodontic appliance. In other words, the suitable removable orthodontic appliance may the printed, for example, with a 3D printer after the suitable removable orthodontic appliance has been determined. Thus, there is no need to keep in stock the set of predefined removable orthodontic appliances. Instead, a removable orthodontic appliance can be printed only when it is actually needed.

In one embodiment, a digital three-dimensional model of the at least one suitable removable orthodontic appliance may be output to produce a physical three-dimensional mould for moulding of the at least one suitable removable orthodontic appliance. In other words, the suitable removable orthodontic appliance may be moulded with a mould that has been printed, for example, with a 3D printer after the suitable removable orthodontic appliance has been determined. Thus, there is no need to keep in stock the set of predefined removable orthodontic appliances. Instead, a removable orthodontic appliance can be moulded only when it is actually needed.

Further, in another embodiment, it is possible to combine one or more of the embodiments illustrated above.

When a database comprises information associated with a plurality of already treated patients, according an embodiment, the information comprises digital impressions of several previously orthodontically treated patient's dentitions before orthodontic treatment and corresponding information about said patients, such as age at the time of initiating treatment, gender, and/or ethnicity etc. as well as information about the orthodontic appliances used in the treatment of the patients as well as information about treatment outcomes. In this embodiment artificial intelligence may be used to compare the digital impression and corresponding data of a new patient with the database in order to find at least one previously treated patient case that correlates with or resembles the new patient case as closely as possible within the available cases in the database. Information of the at least one treated case and/or the corresponding orthodontic appliance may be presented to a clinician treating the new patient for the purpose of decision making. Information of the at least one treated case and/or the corresponding orthodontic appliance may be used in determining at least one suitable removable orthodontic appliance among the set of predefined removable orthodontic appliances based on the comparison.

FIG. 2A illustrates exemplary digital impressions 200A, 200B of upper and lower dental arches. The digital impressions 200A, 200B may have been obtained using an intra-oral scanner or any other scanner or technical means.

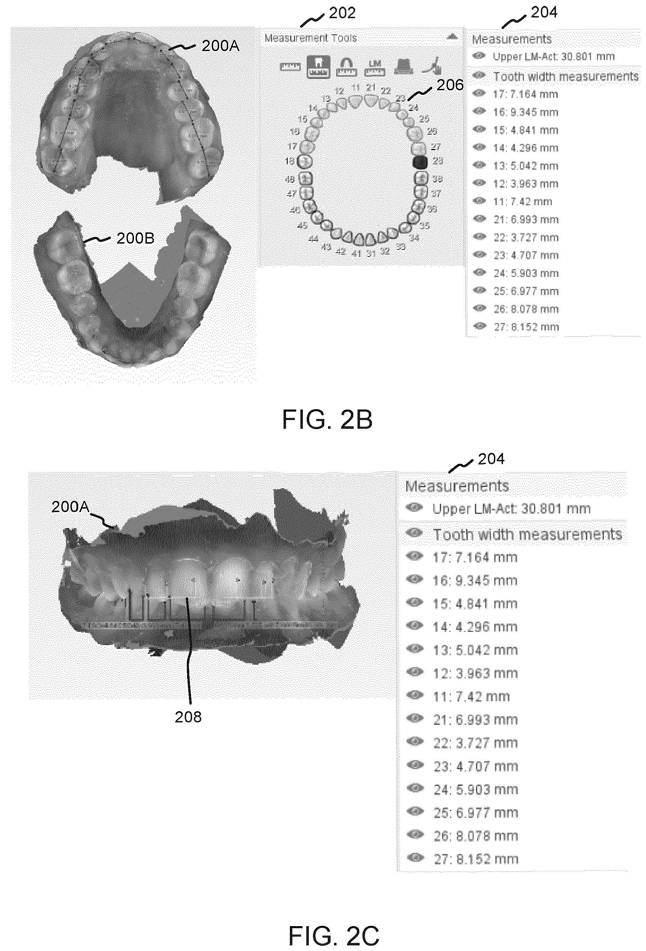

FIG. 2B illustrates a simplified view provided by a computer program executed by a computer. The view comprises the digital impressions 200A, 200B of upper and lower dental arches, a measurement tool section 202 and a measurement section 204. In the example illustrated in FIG. 2B, it is illustrated that tooth width measurements disclosed in the measurement section 204 have been obtained based on the digital impression 200A. The measurements may have been obtained automatically based on the digital impression 200A. Alternatively or additionally, a user may have provided one or more width selections via a graphical user interface. The measurement tool section 202 illustrates mapping between the teeth of the digital impression 200 and teeth 206. As illustrated in FIG. 2B, the tooth width measurements may be displayed also on the teeth of the digital impression 200A.

FIG. 2C illustrates another simplified view provided by the computer program executed by the computer. FIG. 2C, illustrates the digital impression of FIG. 2B in a different viewing angle. FIG. 2C also illustrates a dental arc perimeter 208 from a mesial surface of the left canine to a mesial surface of the right canine. The value (30,801mm) of the dental arc perimeter may be displayed also in the measurement section 204. In one embodiment, the dental arc perimeter 208 may be identified automatically by the computer program based on the digital impression 200A. Alternatively or additionally, a user may have provided one or more selection points via the graphical user interface.

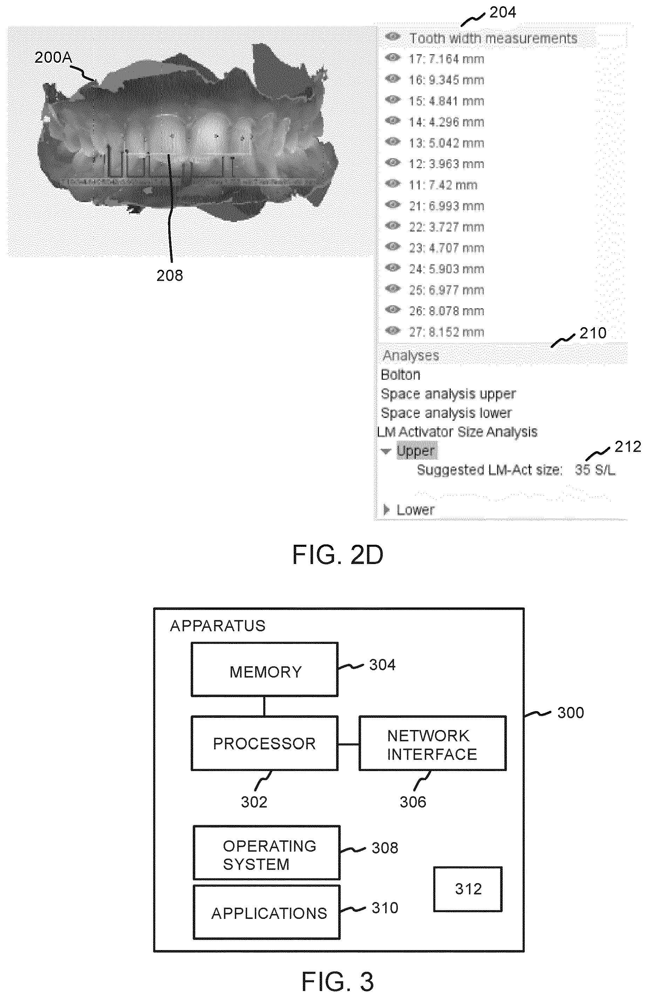

FIG. 2D illustrates another simplified view provided by the computer program executed by the computer. The view illustrated in FIG. 2D is similar to the one illustrated in FIG. 2C with the exception that the view of FID. 2D comprises also analysis section 210. The analysis section 210 comprises an end result 212 of determining at least one suitable removable orthodontic appliance among a set of predefined removable orthodontic appliances.

An advantage of the solution discussed in at least some of the aspect, embodiments and examples above is that when distance measurement based decision support and estimation methods are used, consistent treatment decisions can be made. This may allow a clinician to rely on statistical models and information available to the manufacturer of the appliance in the decision making process. The clinician may use the suggested appliance model as a treatment appliance or use it in their own decision making process to narrow down viable set of appliances and characteristics. Further, after needed measurements are made, the appliance selection logic may be a transparent decision tree and the selected appliance model may always be the same for the same input measurements. Further, the treatment protocol is more uniform and has less variation as the measurement and statistics based method reduces the amount of variation in clinical work. This improves confidence in the proposed method and allows clinicians to transfer duties requiring a lower level of expertise and training to assistant staff whereas the clinical expert can focus on the clinically most demanding evaluation and decision making tasks. A further benefit is that routine manual work can be automated which allows additional time and focus on the expert evaluation and planning work (i.e. treatment planning and design of the orthodontic appliance).

FIG. 3 illustrates a system diagram depicting an exemplary system 300 including a variety of optional hardware and software components, shown generally at 302. Any components 302 in the system 300 can communicate with any other component, although not all connections are shown, for ease of illustration. The system 300 can be any of a variety of computing devices (for example, a computer, a laptop computer, a cloud-based server etc.) and can allow two-way communications with one or more communications networks, such as the Internet.

The illustrated system 300 can include one or more controllers or processors 304 (e.g., signal processor, microprocessor, ASIC, or other control and processing logic circuitry) for performing such tasks as signal coding, data processing, input/output processing, power control, and/or other functions. An operating system 312 can control the allocation and usage of the components 302 and support for one or more application programs 314. The application programs can include common computing applications (e.g., server software), or any other computing application.

The illustrated system 300 can include a memory 306. The memory 306 can include non-removable memory 310 and/or removable memory 308. The non-removable memory 310 can include RAM, ROM, flash memory, a hard disk, or other well-known memory storage technologies. The removable memory 308 can include flash memory or other well-known memory storage technologies. The memory 306 can be used for storing data and/or code for running the operating system 312 and the applications 314. Example data can include text, images, sound files, video data, or other data sets to be sent to and/or received from one or more network servers or other devices via one or more wired or wireless networks. The system 300 can further include a display and at least one input/output interface, which can be a USB port, IEEE 1494 (FireWire) port, and/or RS-242 port etc. All of the illustrated components may not be required, as any components can be deleted and other components can be added.

The system 300 may be configured to implement the various features, examples and embodiments discussed in relation to FIG. 1 partially or completely. The functionality described herein can be performed, at least in part, by one or more computer program product components such as software components. According to an example, the processor 304 may be configured by the program code which when executed performs the examples and embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs).

Further, one or more of the disclosed elements or components of the system 300 may constitute means for obtaining a digital impression of at least part of a dentition of a patient; means for obtaining, based on the digital impression, at least one characteristic relating to at least one tooth; means for comparing the at least one characteristic with corresponding characteristics associated with a set of predefined removable orthodontic appliances; and means for determining at least one suitable removable orthodontic appliance among the set of predefined removable orthodontic appliances based on the comparison

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

All or a portion of the example embodiments can be conveniently implemented using one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments can be implemented by the preparation of application-specific integrated circuits or by interconnecting an appropriate network of conventional component circuits, as will be appreciated by those skilled in the electrical art(s).

In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, non-volatile media, volatile media, transmission media, and the like.

The present invention is defined by the appended claims.

## Claims

1. A computer-implemented method for determining at least one removable orthodontic appliance, the method comprising:
obtaining a digital impression (200A, 200B) of at least part of a dentition of a patient;
obtaining, based on the digital impression (200A, 200B), at least one characteristic relating to at least one tooth;
comparing the at least one characteristic with corresponding characteristics associated with a set of predefined removable orthodontic appliances;
**characterised by** the steps of:
comparing the digital impression (200A, 200B) of the patient and information associated with the patient to digital impressions, removable orthodontic appliances and information associated with a plurality of previously treated patients stored in a database;
determining, based on the comparison with previously treated patients, at least one previously treated patient that correlates with or resembles the patient's case; and
determining at least one suitable removable orthodontic appliance among the set of predefined removable orthodontic appliances based on the comparison of the at least one characteristic with corresponding characteristics associated with the set of predefined removable orthodontic appliances and on using the information of the determined at least one previously treated patient's case.

2. A computer- implemented method of claim 1, wherein the at least one characteristic comprises a dental arc perimeter (208) from a mesial surface of the left canine to a mesial surface of the right canine.

3. A computer-implemented method of claim 1 or 2, wherein the at least one characteristic comprises a width measurement of at least one individual tooth.

4. A computer-implemented method of any of claims 1 - 3, wherein the at least one characteristic comprises mesiodistal widths of an erupted left lateral incisor, erupted left central incisor, erupted right central incisor and erupted right lateral incisor of the same jaw of the digital impression (200A, 200B).

5. A computer-implemented method of any of claims 1 - 4, wherein the at least one characteristic comprises a measurement of a dental arch depth of the digital impression (200A, 200B).

6. A computer-implemented method of any of claims 1 - 5, wherein the at least one characteristic comprises a descriptor of a dental arch width of the digital impression (200A, 200B).

7. A computer-implemented method of any of claims 1 - 6, further comprising:
obtaining a cephalometric analysis of the patient comprising a vertical growth pattern descriptor of the patient;
comparing the vertical growth pattern descriptor with corresponding characteristics associated with the set of predefined removable orthodontic appliances; and
determining the at least one suitable removable orthodontic appliance among the set of predefined removable orthodontic appliances based on the comparison.

8. A computer-implemented method of claim 7, wherein the cephalometric analysis is based on a cone beam computed tomography image.

9. A computer-implemented method of any of claims 1 - 8, wherein the at least one characteristic comprises mesiodistal widths of any unerupted permanent lateral incisor, unerupted permanent left central incisor, unerupted permanent right central incisor and unerupted permanent right lateral incisor of the same jaw of the digital impression (200A, 200B), and wherein the method further comprises:
obtaining a magnetic resonance imaging or a radiographic image of unerupted teeth of the dentition;
obtaining data regarding the eruption status of the patient; and
wherein the comparing comprises comparing the measurements of the erupted incisors and the unerupted incisors with corresponding characteristics associated with the set of predefined removable orthodontic appliances.

10. A computer-implemented method of any of claims 1 - 9, further comprising:
outputting a digital three-dimensional model of the at least one suitable removable orthodontic appliance to produce a physical three-dimensional model of the at least one suitable removable orthodontic.

11. A system (300) for determining at least one removable orthodontic appliance, the system comprising:
at least one processing unit (300);
at least one memory (304) connected to the at least one processing unit (302);
wherein the at least one memory (304) stores program instructions that, when executed by the at least one processing unit (302), cause the system (300) to perform a method according to claim 1.

12. A system (300) of claim 11, wherein the at least one characteristic comprises a dental arc perimeter (208) from a mesial surface of the left canine to a mesial surface of the right canine.

13. A system (300) of claim 11 or 12, wherein the at least one characteristic comprises a width measurement of at least one individual tooth.

14. A system (300) of any of claims 11 - 13, wherein the at least one characteristic comprises mesiodistal widths of an erupted left lateral incisor, erupted left central incisor, erupted right central incisor and erupted right lateral incisor of the same jaw of the digital impression (200A, 200B).

15. A system (300) of any of claims 11 - 14, wherein the at least one characteristic comprises a measurement of a dental arch depth of the digital impression (200A, 200B).

16. A system (300) of any of claims 11 - 15, wherein the at least one characteristic comprises a descriptor of a dental arch width of the digital impression.

17. A system (300) of any of claims 11 - 16, wherein the at least one memory (304) stores program instructions that, when executed by the at least one processing unit (302), cause the system (300) to:
obtain a cephalometric analysis of the patient comprising a vertical growth pattern descriptor of the patient;
compare the vertical growth pattern descriptor with corresponding characteristics associated with the set of predefined removable orthodontic appliances; and
determine the at least one suitable removable orthodontic appliance among the set of predefined removable orthodontic appliances based on the comparison.

18. A system (300) of claim 17, wherein the cephalometric analysis is based on a cone beam computed tomography image.

19. A system (300) of any of claims 11 - 18, wherein the at least one characteristic comprises mesiodistal widths of any unerupted permanent lateral incisor, unerupted permanent left central incisor, unerupted permanent right central incisor and unerupted permanent right lateral incisor of the same jaw of the digital impression (200A, 200B), and wherein the at least one memory (304) stores program instructions that, when executed by the at least one processing unit (302), cause the system (300) to:
obtaining a magnetic resonance imaging or a radiographic image of unerupted teeth of the dentition;
obtaining data regarding the eruption status of the patient; and
wherein the comparing comprises comparing the measurements of the erupted incisors and the unerupted incisors with corresponding characteristics associated with the set of predefined removable orthodontic appliances.

20. A system (300) of any of claims 11 - 19, wherein the at least one memory (304) stores program instructions that, when executed by the at least one processing unit (302), cause the system (300) to:
output a digital three-dimensional model of the at least one suitable removable orthodontic appliance to produce a physical three-dimensional model of the at least one suitable removable orthodontic.

21. A computer program comprising program code, which when executed by at least one processor (302), causes the at least one processor (302) to perform the method of any of claims 1 - 10.

22. A computer readable medium comprising program code, which when executed by at least one processor (302), causes the at least one processor (302) to perform the method of any of claims 1 - 10.

## Patentansprüche

1. Computerimplementiertes Verfahren zum Bestimmen mindestens einer entfernbaren, orthodontischen Vorrichtung, wobei das Verfahren Folgendes umfasst:
Erhalten eines digitalen Abdrucks (200A, 200B) von mindestens einem Teil eines Gebisses eines Patienten;
Erhalten, basierend auf dem digitalen Abdruck (200A, 200B), mindestens eines Merkmals, das sich auf mindestens einen Zahn bezieht;
Vergleichen des mindestens einen Merkmals mit entsprechenden Merkmalen, die einem Satz von vordefinierten, entfernbaren, orthodontischen Vorrichtungen zugeordnet sind;
**gekennzeichnet durch** die folgenden Schritte:
Vergleichen des digitalen Abdrucks (200A, 200B) des Patienten und von Informationen, die dem Patienten zugeordnet sind, mit digitalen Abdrücken, entfernbaren, orthodontischen Vorrichtungen und Informationen, die einer Vielzahl von zuvor behandelten Patienten zugeordnet sind, die in einer Datenbank gespeichert sind;
Bestimmen, basierend auf dem Vergleich mit zuvor behandelten Patienten, mindestens eines zuvor behandelten Patienten, der mit dem Fall des Patienten korreliert oder diesem ähnelt; und
Bestimmen mindestens einer geeigneten, entfernbaren, orthodontischen Vorrichtung aus dem Satz von vordefinierten, entfernbaren, orthodontischen Vorrichtungen basierend auf dem Vergleich des mindestens einen Merkmals mit entsprechenden Merkmalen, die dem Satz von vordefinierten, entfernbaren, orthodontischen Vorrichtungen zugeordnet sind, und Verwenden der Informationen des mindestens einen bestimmten Falls des zuvor behandelten Patienten.

2. Computerimplementiertes Verfahren nach Anspruch 1, wobei das mindestens eine Merkmal einen Zahnbogenumfang (208) umfasst, der von einer mesialen Oberfläche des linken Eckzahns zu einer mesialen Oberfläche des rechten Eckzahns reicht.

3. Computerimplementiertes Verfahren nach Anspruch 1 oder 2, wobei das mindestens eine Merkmal ein Breitenmaß mindestens eines einzelnen Zahns umfasst.

4. Computerimplementiertes Verfahren nach einem der Ansprüche 1-3, wobei das mindestens eine Merkmal mesiodistale Breiten eines durchgebrochenen, linken, seitlichen Schneidzahns, eines durchgebrochenen, linken, mittleren Schneidzahns, eines durchgebrochenen, rechten, mittleren Schneidzahns und eines durchgebrochenen, rechten, seitlichen Schneidzahns desselben Kiefers des digitalen Abdrucks (200A, 200B) umfasst.

5. Computerimplementiertes Verfahren nach einem der Ansprüche 1-4, wobei das mindestens eine Merkmal ein Maß einer Zahnbogentiefe des digitalen Abdrucks (200A, 200B) umfasst.

6. Computerimplementiertes Verfahren nach einem der Ansprüche 1-5, wobei das mindestens eine Merkmal einen Deskriptor einer Zahnbogenbreite des digitalen Abdrucks (200A, 200B) umfasst.

7. Computerimplementiertes Verfahren nach einem der Ansprüche 1-6, ferner mit:
Erhalten einer cephalometrischen Analyse des Patienten, die einen Deskriptor eines vertikalen Wachstumsmusters des Patienten umfasst;
Vergleichen des Deskriptors des vertikalen Wachstumsmusters mit entsprechenden Merkmalen, die dem Satz von vordefinierten, entfernbaren, orthodontischen Vorrichtungen zugeordnet sind; und
Bestimmen der mindestens einen geeigneten, entfernbaren, orthodontischen Vorrichtung aus dem Satz von vordefinierten, entfernbaren, orthodontischen Vorrichtungen basierend auf dem Vergleich.

8. Computerimplementiertes Verfahren nach Anspruch 7, wobei die cephalometrische Analyse auf einem Kegelstrahl-CT-Bild basiert.

9. Computerimplementiertes Verfahren nach einem der Ansprüche 1-8, wobei das mindestens eine Merkmal mesiodistale Breiten eines nicht durchgebrochenen, permanenten, seitlichen Schneidzahns, eines nicht durchgebrochenen, permanenten, linken, mittleren Schneidzahns, eines nicht durchgebrochenen, permanenten, rechten, mittleren Schneidzahns und eines nicht durchgebrochenen, permanenten, rechten, seitlichen Schneidzahns desselben Kiefers des digitalen Abdrucks (200A, 200B) umfasst, und wobei das Verfahren ferner Folgendes umfasst:
Erhalten einer Magnetresonanzbildgebung oder eines Röntgenbilds der nicht durchgebrochenen Zähne des Gebisses;
Erhalten von Daten, die sich auf den Durchbruchszustand des Patienten beziehen; und
wobei das Vergleichen das Vergleichen der Messungen der durchgebrochenen Schneidzähne und der nicht durchgebrochenen Schneidzähne mit entsprechenden Merkmalen, die dem Satz von vordefinierten, entfernbaren, orthodontischen Vorrichtungen zugeordnet sind, umfasst.

10. Computerimplementiertes Verfahren nach einem der Ansprüche 1-9, ferner mit:
Ausgeben eines digitalen, dreidimensionalen Modells der mindestens einen geeigneten, entfernbaren, orthodontischen Vorrichtung, um ein physisches dreidimensionales Modell der mindestens einen geeigneten, entfernbaren, orthodontischen Vorrichtung zu erzeugen.

11. System (300) zum Bestimmen mindestens einer entfernbaren, orthodontischen Vorrichtung, wobei das System Folgendes umfasst:
mindestens eine Verarbeitungseinheit (300);
mindestens einen Speicher (304), der mit der mindestens einen Verarbeitungseinheit (302) verbunden ist;
wobei der mindestens eine Speicher (304) Programmanweisungen speichert, die, wenn sie von der mindestens einen Verarbeitungseinheit (302) ausgeführt werden, das System (300) veranlassen, ein Verfahren nach Anspruch 1 durchzuführen.

12. System (300) nach Anspruch 11, wobei das mindestens eine Merkmal einen Zahnbogenumfang (208) umfasst, der von einer mesialen Oberfläche des linken Eckzahns zu einer mesialen Oberfläche des rechten Eckzahns reicht.

13. System (300) nach Anspruch 11 oder 12, wobei das mindestens eine Merkmal ein Breitenmaß mindestens eines einzelnen Zahns umfasst.

14. System (300) nach einem der Ansprüche 11-13, wobei das mindestens eine Merkmal mesiodistale Breiten eines durchgebrochenen, linken, seitlichen Schneidzahns, eines durchgebrochenen, linken, mittleren Schneidzahns, eines durchgebrochenen, rechten, mittleren Schneidzahns und eines durchgebrochenen, rechten, seitlichen Schneidzahns desselben Kiefers des digitalen Abdrucks (200A, 200B) umfasst.

15. System (300) nach einem der Ansprüche 11-14, wobei das mindestens eine Merkmal ein Maß einer Zahnbogentiefe des digitalen Abdrucks (200A, 200B) umfasst.

16. System (300) nach einem der Ansprüche 11-15, wobei das mindestens eine Merkmal einen Deskriptor einer Zahnbogenbreite des digitalen Abdrucks umfasst.

17. System (300) nach einem der Ansprüche 11-16, wobei der mindestens eine Speicher (304) Programmanweisungen speichert, die, wenn sie von der mindestens einen Verarbeitungseinheit (302) ausgeführt werden, das System (300) zu Folgendem veranlassen:
Erhalten einer cephalometrischen Analyse des Patienten, die einen Deskriptor eines vertikalen Wachstumsmusters des Patienten umfasst;
Vergleichen des Deskriptors des vertikalen Wachstumsmusters mit entsprechenden Merkmalen, die dem Satz von vordefinierten, entfernbaren, orthodontischen Vorrichtungen zugeordnet sind; und
Bestimmen der mindestens einen geeigneten, entfernbaren, orthodontischen Vorrichtung aus dem Satz von vordefinierten, entfernbaren, orthodontischen Vorrichtungen basierend auf dem Vergleich.

18. System (300) nach Anspruch 17, wobei die cephalometrische Analyse auf einem Kegelstrahl-CT-Bild basiert.

19. System (300) nach einem der Ansprüche 11-18, wobei das mindestens eine Merkmal mesiodistale Breiten eines nicht durchgebrochenen, permanenten, seitlichen Schneidzahns, eines nicht durchgebrochenen, permanenten, linken, mittleren Schneidzahns, eines nicht durchgebrochenen, permanenten, rechten, mittleren Schneidzahns und eines nicht durchgebrochenen, permanenten, rechten, seitlichen Schneidzahns desselben Kiefers des digitalen Abdrucks (200A, 200B) umfasst, und wobei der mindestens eine Speicher (304) Programmanweisungen speichert, die, wenn sie von der mindestens einen Verarbeitungseinheit (302) ausgeführt werden, das System (300) zu Folgendem veranlassen:
Erhalten einer Magnetresonanzbildgebung oder eines Röntgenbilds der nicht durchgebrochenen Zähne des Gebisses;
Erhalten von Daten, die sich auf den Durchbruchszustand des Patienten beziehen; und
wobei das Vergleichen das Vergleichen der Messungen der durchgebrochenen Schneidzähne und der nicht durchgebrochenen Schneidzähne mit entsprechenden Merkmalen, die dem Satz von vordefinierten, entfernbaren, orthodontischen Vorrichtungen zugeordnet sind, umfasst.

20. System (300) nach einem der Ansprüche 11-19, wobei der mindestens eine Speicher (304) Programmanweisungen speichert, die, wenn sie von der mindestens einen Verarbeitungseinheit (302) ausgeführt werden, das System (300) zu Folgendem veranlassen:
Ausgeben eines digitalen, dreidimensionalen Modells der mindestens einen geeigneten, entfernbaren, orthodontischen Vorrichtung, um ein physisches, dreidimensionales Modell der mindestens einen geeigneten, entfernbaren, orthodontischen Vorrichtung zu erzeugen.

21. Computerprogramm, das Programmcode umfasst, der, wenn er von mindestens einem Prozessor (302) ausgeführt wird, den mindestens einen Prozessor (302) veranlasst, das Verfahren nach einem der Ansprüche 1-10 durchzuführen.

22. Computerlesbares Medium, das Programmcode umfasst, der, wenn er von mindestens einem Prozessor (302) ausgeführt wird, den mindestens einen Prozessor (302) veranlasst, das Verfahren nach einem der Ansprüche 1-10 durchzuführen.

## Revendications

1. Procédé mis en œuvre par ordinateur pour déterminer au moins un appareil orthodontique amovible, le procédé comprenant :
l'obtention d'une empreinte numérique (200A, 200B) d'au moins une partie d'une dentition d'un patient ;
l'obtention, sur la base de l'empreinte numérique (200A, 200B), d'au moins une caractéristique se rapportant à au moins une dent ;
la comparaison de la au moins une caractéristique à des caractéristiques correspondantes associées à un ensemble d'appareils orthodontiques amovibles prédéfinis ;
**caractérisé par** les étapes suivantes :
la comparaison de l'empreinte numérique (200A, 200B) du patient et des informations associées au patient à des empreintes numériques, des appareils orthodontiques amovibles et des informations associées à une pluralité de patients précédemment traités stockées dans une base de données ;
la détermination, sur la base de la comparaison à des patients précédemment traités, d'au moins un patient précédemment traité qui est en corrélation avec le cas du patient ou qui lui ressemble ; et
la détermination d'au moins un appareil orthodontique amovible approprié parmi l'ensemble d'appareils orthodontiques amovibles prédéfinis sur la base de la comparaison de la au moins une caractéristique à des caractéristiques correspondantes associées à l'ensemble d'appareils orthodontiques amovibles prédéfinis et de l'utilisation des informations du au moins un cas déterminé du patient précédemment traité.

2. Procédé mis en œuvre par ordinateur selon la revendication 1, dans lequel la au moins une caractéristique comprend un périmètre d'arcade dentaire (208) allant d'une surface mésiale de la canine gauche à une surface mésiale de la canine droite.

3. Procédé mis en œuvre par ordinateur selon la revendication 1 ou 2, dans lequel la au moins une caractéristique comprend une mesure de largeur d'au moins une dent individuelle.

4. Procédé mis en œuvre par ordinateur selon l'une quelconque des revendications 1-3, dans lequel la au moins une caractéristique comprend des largeurs mésiodistales d'une incisive latérale gauche ayant percé, d'une incisive centrale gauche ayant percé, d'une incisive centrale droite ayant percé et d'une incisive latérale droite ayant percé de la même mâchoire de l'empreinte numérique (200A, 200B).

5. Procédé mis en œuvre par ordinateur selon l'une quelconque des revendications 1-4, dans lequel la au moins une caractéristique comprend une mesure d'une profondeur d'arcade dentaire de l'empreinte numérique (200A, 200B).

6. Procédé mis en œuvre par ordinateur selon l'une quelconque des revendications 1-5, dans lequel la au moins une caractéristique comprend un descripteur d'une largeur d'arcade dentaire de l'empreinte numérique (200A, 200B).

7. Procédé mis en œuvre par ordinateur selon l'une quelconque des revendications 1-6, comprenant en outre :
l'obtention d'une analyse céphalométrique du patient comprenant un descripteur de motif de croissance verticale du patient ;
la comparaison du descripteur de motif de croissance verticale à des caractéristiques correspondantes associées à l'ensemble d'appareils orthodontiques amovibles prédéfinis ; et
la détermination du au moins un appareil orthodontique amovible approprié parmi l'ensemble d'appareils orthodontiques amovibles prédéfinis sur la base de la comparaison.

8. Procédé mis en œuvre par ordinateur selon la revendication 7, dans lequel l'analyse céphalométrique est basée sur une image de tomodensitométrie à faisceau conique.

9. Procédé mis en œuvre par ordinateur selon l'une quelconque des revendications 1-8, dans lequel la au moins une caractéristique comprend des largeurs mésiodistales de toute incisive latérale permanente n'ayant pas percé, de toute incisive centrale gauche permanente n'ayant pas percé, de toute incisive centrale droite permanente n'ayant pas percé et de toute incisive latérale droite permanente n'ayant pas percé de la même mâchoire de l'empreinte numérique (200A, 200B), et dans lequel le procédé comprend en outre :
l'obtention d'une imagerie par résonance magnétique ou d'une image radiographique des dents n'ayant pas percé de la dentition ;
l'obtention de données concernant l'état d'éruption du patient ; et
dans lequel la comparaison comprend la comparaison des mesures des incisives ayant percé et des incisives n'ayant pas percé à des caractéristiques correspondantes associées à l'ensemble d'appareils orthodontiques amovibles prédéfinis.

10. Procédé mis en œuvre par ordinateur selon l'une quelconque des revendications 1-9, comprenant en outre :
la sortie d'un modèle tridimensionnel numérique du au moins un appareil orthodontique amovible approprié pour produire un modèle tridimensionnel physique du au moins un appareil orthodontique amovible approprié.

11. Système (300) pour déterminer au moins un appareil orthodontique amovible, le système comprenant :
au moins une unité de traitement (300) ;
au moins une mémoire (304) raccordée à la au moins une unité de traitement (302) ;
dans lequel la au moins une mémoire (304) stocke des instructions de programme qui, lorsqu'elles sont exécutées par la au moins une unité de traitement (302), amènent le système (300) à réaliser un procédé selon la revendication 1.

12. Système (300) selon la revendication 11, dans lequel la au moins une caractéristique comprend un périmètre d'arcade dentaire (208) allant d'une surface mésiale de la canine gauche à une surface mésiale de la canine droite.

13. Système (300) selon la revendication 11 ou 12, dans lequel la au moins une caractéristique comprend une mesure de largeur d'au moins une dent individuelle.

14. Système (300) selon l'une quelconque des revendications 11-13, dans lequel la au moins une caractéristique comprend des largeurs mésiodistales d'une incisive latérale gauche ayant percé, d'une incisive centrale gauche ayant percé, d'une incisive centrale droite ayant percé et d'une incisive latérale droite ayant percé de la même mâchoire de l'empreinte numérique (200A, 200B).

15. Système (300) selon l'une quelconque des revendications 11-14, dans lequel la au moins une caractéristique comprend une mesure d'une profondeur d'arcade dentaire de l'empreinte numérique (200A, 200B).

16. Système (300) selon l'une quelconque des revendications 11-15, dans lequel la au moins une caractéristique comprend un descripteur d'une largeur d'arcade dentaire de l'empreinte numérique.

17. Système (300) selon l'une quelconque des revendications 11-16, dans lequel la au moins une mémoire (304) stocke des instructions de programme qui, lorsqu'elles sont exécutées par la au moins une unité de traitement (302), amènent le système (300) à :
obtenir une analyse céphalométrique du patient comprenant un descripteur de motif de croissance verticale du patient ;
comparer le descripteur de motif de croissance verticale à des caractéristiques correspondantes associées à l'ensemble d'appareils orthodontiques amovibles prédéfinis ; et
déterminer le au moins un appareil orthodontique amovible approprié parmi l'ensemble d'appareils orthodontiques amovibles prédéfinis sur la base de la comparaison.

18. Système (300) selon la revendication 17, dans lequel l'analyse céphalométrique est basée sur une image de tomodensitométrie à faisceau conique.

19. Système (300) selon l'une quelconque des revendications 11-18, dans lequel la au moins une caractéristique comprend des largeurs mésiodistales de toute incisive latérale permanente n'ayant pas percé, de toute incisive centrale gauche permanente n'ayant pas percé, de toute incisive centrale droite permanente n'ayant pas percé et de toute incisive latérale droite permanente n'ayant pas percé de la même mâchoire de l'empreinte numérique (200A, 200B), et dans lequel la au moins une mémoire (304) stocke des instructions de programme qui, lorsqu'elles sont exécutées par la au moins une unité de traitement (302), amènent le système (300) à réaliser :
l'obtention d'une imagerie par résonance magnétique ou d'une image radiographique des dents n'ayant pas percé de la dentition ;
l'obtention de données concernant l'état d'éruption du patient ; et
dans lequel la comparaison comprend la comparaison des mesures des incisives ayant percé et des incisives n'ayant pas percé à des caractéristiques correspondantes associées à l'ensemble d'appareils orthodontiques amovibles prédéfinis.

20. Système (300) selon l'une quelconque des revendications 11-19, dans lequel la au moins une mémoire (304) stocke des instructions de programme qui, lorsqu'elles sont exécutées par la au moins une unité de traitement (302), amènent le système (300) à :
délivrer en sortie un modèle tridimensionnel numérique du au moins un appareil orthodontique amovible approprié pour produire un modèle tridimensionnel physique du au moins un appareil orthodontique amovible approprié.

21. Programme informatique comprenant un code de programme qui, lorsqu'il est exécuté par au moins un processeur (302), amène le au moins un processeur (302) à réaliser le procédé selon l'une quelconque des revendications 1-10.

22. Support lisible par ordinateur comprenant un code de programme qui, lorsqu'il est exécuté par au moins un processeur (302), amène le au moins un processeur (302) à réaliser le procédé selon l'une quelconque des revendications 1-10.
